(19) Europäisches Patentamt
European Patent Office
Office européen des brevets

(11) **EP 2 400 768 A2**

(12) **EUROPEAN PATENT APPLICATION**

(43) Date of publication:
**28.12.2011 Bulletin 2011/52**

(51) Int Cl.:
***H04N 13/00*** *(2006.01)*

(21) Application number: **11163808.6**

(22) Date of filing: **27.04.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **25.06.2010 US 358602 P**
**16.08.2010 KR 20100078710**

(71) Applicant: **SAMSUNG ELECTRONICS CO., LTD.**
**Suwon-si**
**Gyeonggi-do 442-742 (KR)**

(72) Inventors:
• **Oh, Byung Tae**
**446-712, Gyeonggi-do (KR)**
• **Park, Du Sik**
**446-712, Gyeonggi-do (KR)**
• **Wey, Ho Cheon**
**446-712, Gyeonggi-do (KR)**

(74) Representative: **Land, Addick Adrianus Gosling**
**Arnold & Siedsma**
**Sweelinckplein 1**
**2517 GK The Hague (NL)**

(54) **Method, apparatus and computer-readable medium for coding and decoding depth image using color image**

(57) A depth image may be compressed and transmitted after being sampled to have less information before being coded, as opposed to a conventional scheme of compressing an original depth image. An uncompressed depth image of a non-transmitted depth image may be restored by sampling based on color information associated with a decoded color image and depth information associated with a decoded depth image. Thus, compression may be improved.

**Description**

This application claims the benefit under 35 U.S.C. § 119(e) of U.S. Provisional Application No. 61/358,602, filed on June 25, 2010, in the U.S. Patent and Trademark Office and Korean Patent Application No. 10-2010-0078710 filed August 16, 2010, the entire disclosures of which are incorporated herein by reference.

Example embodiments relate to a depth image coding apparatus and a depth image decoding apparatus using a color image, and methods thereof.

Generally, a depth image coding and decoding scheme using a color image may be applicable to a three-dimensional (3D) image compression and transmission field used for representing a cubic effect, and may be useful in a field where a bitrate of a depth image is reduced as a result of limited bandwidth.

The depth image may include piece-wise even elements and may have a large number of low frequency components in comparison to the color image. The even elements may form a clear contour and may constitute frequency components in a middle bandwidth. A superior compression efficiency may not be expected from an image compression scheme, such as a block DCT/quantization-based H.264/MPEG-4 AVC and the like, as a result of the described characteristics of the depth image.

When the depth image is regarded as an independent image and the image compression scheme is applied to the depth image, the superior compression efficiency may not be expected because characteristics of the depth image and characteristics of the color image, which are different from each other, are not reflected.

The depth image and the color image represent as a color and a depth an identical image having an identical view. Thus, there is a high correlation between the color image and the depth image. Therefore, separately compressing and transmitting the color image and the depth image may be inefficient.

The foregoing and/or other aspects are achieved by providing a depth image coding apparatus, the apparatus including a computer comprising a depth image extractor to extract a depth image by performing sampling, and the computer comprising a coding unit to code the extracted depth image and an input color image.

The depth image extractor may extract the depth image by performing one of spatial-axis sampling, temporal-axis sampling, and masking.

The depth image extractor may perform sampling of an input depth image to extract a sampled depth image having a less information than the input depth image.

The depth image extractor may perform one of temporal-axis sampling of the input depth image to extract a sampled depth image having less temporal information than the input depth image, spatial-axis sampling of the input depth image to extract a sampled depth image having less spatial information than the input depth image, and masking of the input depth image to extract a masked depth image.

The depth image extractor may extract the depth image based on one of a fixed sampling scheme and a variable sampling scheme.

The foregoing and/or other aspects are achieved by providing a depth image decoding apparatus, the apparatus including a computer comprising, a decoding unit to decode a coded depth image and a coded color image, and the computer comprising a depth image restoring unit to restore a portion of the decoded depth image corresponding to a portion of the decoded color image based on the decoded color image , when depth information associated with the portion of the decoded depth image corresponding to the portion of the decoded color image does not exist.

The depth image restoring unit may analyze at least one adjacent color image frame to obtain motion information between frames when the decoded color image is used, and may restore one of an uncompressed depth image and a non-transmitted depth image by performing sampling.

The depth image restoring unit may restore the portion of the decoded depth image based on pixel values of adjacent depth images.

The depth image restoring unit may restore the portion of the depth image based on an average value obtained by averaging the at least one value that is referred to by the block or the pixel when one of a block to be restored and a pixel to be restored refers to at least one value.

The depth image restoring unit may detect motion information based on a motion vector of color information associated with the decoded color image to obtain the motion information through the color information associated with the decoded color image, may calculate a residual energy of the decoded color image by placing the motion vector in a center of a search range to predict a motion accuracy, and may determine the search range to restore the portion of the depth image.

The foregoing and/or other aspects are achieved by providing a depth image coding method, the method including extracting, by at least one processor, a depth image by performing sampling, and coding, by the at least one processor, the extracted depth image and an input color image.

The extracting may extract the depth image by performing one of spatial-axis sampling, temporal-axis sampling, and masking.

The extracting may perform sampling of an input depth image to extract a sampled depth image having less information than the input depth image.

The extracting may include one of temporal-axis sampling of the input depth image to extract a sampled depth image having less temporal information than the input depth image, spatial-axis sampling of the input depth image to extract a sampled depth image having less spatial information than the input depth image, and masking of the input depth image to extract a masked depth image.

The extracting may extract the depth image based on one of a fixed sampling scheme and a variable sampling scheme.

The foregoing and/or other aspects are achieved by providing a depth image decoding method, the method including decoding, by at least one processor, a coded depth image and a coded color image, and restoring by the at least one processor, based on the decoded color image, a portion of the decoded depth image corresponding to a portion of the decoded color image, when depth information associated with the portion of the decoded depth image corresponding to the portion of the decoded color image does not exist.

The restoring may analyze at least one adjacent color image frame to obtain motion information between frames when the decoded color image is used, and may restore one of an uncompressed depth image and non-transmitted depth image by performing sampling.

The restoring may restore the portion of the decoded depth image using pixel values of adjacent depth images.

The restoring may restore the portion of the decoded depth image based on an average value of averaging at least one value that is referred to by one of the block and pixel when one of a block to be restored and a pixel to be restored refers to the at least one value.

The restoring may detect motion information based on a motion vector of color information associated with the decoded color image to obtain the motion information from the color information associated with the decoded color image, may calculate a residual energy of the decoded color image by placing the motion vector in a center of a search range to predict a motion accuracy, and may determine the search range to restore the depth image.

The foregoing and/or other aspects are achieved by providing a method including sampling and compressing a depth image using at least one processor and removing data from the depth image to form a sampled depth image and encoding the sampled depth image and a corresponding color image using the at least one processor.

The sampling may further include spatial-axis sampling, temporal-axis sampling, and masking.

The foregoing and/or other aspects are achieved by providing a method decoding an encoded depth image and an encoded color image using at least one processor to form a decoded depth image and a decoded color image; and recreating a first portion of the decoded depth image using a second portion of the decoded color image using the at least one processor without having access to depth data for the first portion, the first portion corresponding to the second portion.

The reacting may be based on data in adjacent depth images.

According to example embodiments, a bitrate generated from a depth image may be reduced because bandwidth is limited in a three-dimensional (3D) image compression/transmission field used for representing a cubic effect.

According to example embodiments, quality of a composite image may be improved through a depth image, and a bitrate of a coded depth image may be reduced based on a compression algorithm using a correlation between a color image and the depth image.

According to example embodiments, a depth image may be compressed and transmitted after being sampled. Thus, the sampled depth image may have less information before being coded, as opposed to a conventional scheme of compressing an original depth image. An uncompressed depth image of a non-transmitted depth image may be restored by sampling based on color information associated with a decoded color image and depth information associated with a decoded depth image and compression may be improved.

According to another aspect of one or more embodiments, there is provided at least one non-transitory computer readable medium including computer readable instructions that control at least one processor to implement methods of one or more embodiments.

Additional aspects, features, and/or advantages of embodiments will be set forth in part in the description which follows and, in part, will be apparent from the description, or may be learned by practice of the disclosure.

BRIEF DESCRIPTION OF THE DRAWINGS

These and/or other aspects and advantages will become apparent and more readily appreciated from the following description of the embodiments, taken in conjunction with the accompanying drawings of which:

FIG. 1 is a diagram illustrating a configuration of a depth image coding apparatus and a configuration of a depth image decoding apparatus according to example embodiments;
FIG. 2 is a diagram illustrating an example of extracting a depth image by performing sampling according to example embodiments;

FIG. 3 is a diagram illustrating an example of a fixed sampling scheme and a variable sampling scheme according to example embodiments;

FIG. 4 is a diagram illustrating an example of restoring a depth image using motion information of a decoded color image; and

FIG. 5 is a diagram illustrating a process of improving a prediction speed and an accuracy of motion information of a decoded color image.

DETAILED DESCRIPTION

Reference will now be made in detail to embodiments, examples of which are illustrated in the accompanying drawings, wherein like reference numerals refer to like elements throughout. Embodiments are described below to explain the present disclosure by referring to the figures.

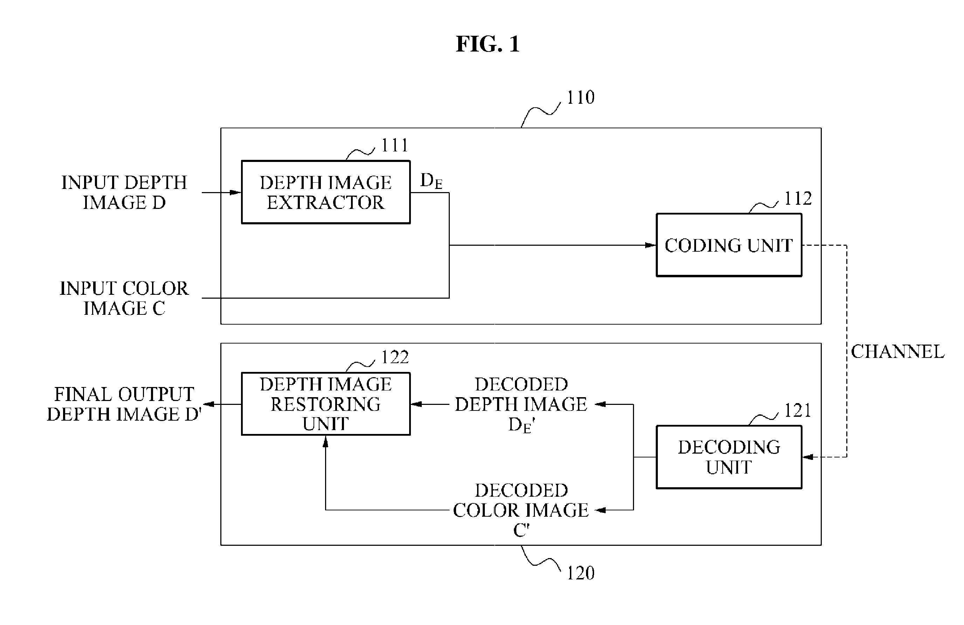

FIG. 1 illustrates a configuration of a depth image coding apparatus and a configuration of a depth image decoding apparatus according to example embodiments

Referring to FIG. 1, a depth image coding apparatus 110 may include a depth image extractor 111 and a coding unit 112.

The depth image coding apparatus 110 using the depth image extractor 111 may perform sampling of an input depth image D to extract a sampled depth image $D_E$ having a relatively smaller amount of information compared with the input depth image D. In other words, the sampled depth image $D_E$ may have less information than the input depth image D. The sampling may be performed to reduce an amount of information associated with the input depth image D, thereby improving performance of compression. The sampled depth image $D_E$, together with a color image C, may be coded by the coding unit 112.

The depth image extractor 111 may extract the depth image by performing sampling.

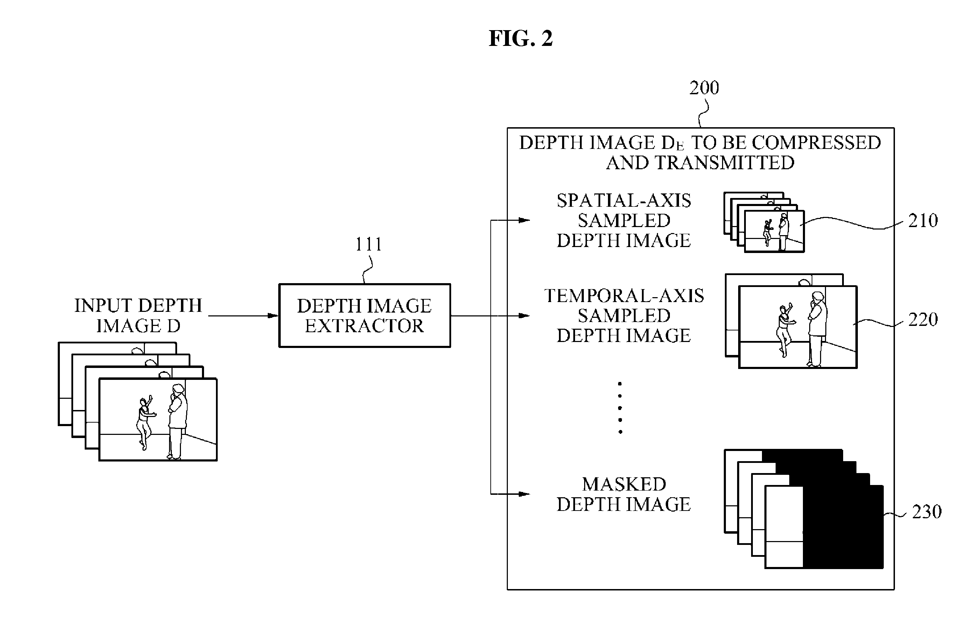

FIG. 2 illustrates an example of extracting a depth image by performing sampling according to example embodiments.

Referring to FIG. 2, the depth image extractor 111 may perform sampling of an input depth image D to extract a sampled depth image $D_E$ 200 to be compressed and transmitted, such as a spatial-axis sampled depth image 210, a temporal-axis sampled depth image 220, and a masked depth image 230.

The depth image extractor 111 may perform sampling of the input depth image D to extract the sampled depth image $D_E$ having less information than the input depth image D. The sampled depth image $D_E$ may generate a smaller bitrate while being compressed as compared with the input depth image D

For example, the depth image extractor 111 may perform temporal-axis sampling of the input depth image D to extract the temporal-axis sampled depth image 220 having less temporal information than the input depth image D.

For example, the depth image extractor 111 may perform spatial-axis sampling of the input depth image D to extract the spatial-axis sampled depth image 210 having less spatial information than the input depth image D.

For example, the depth image extractor 111 may perform masking of the input depth image D to mask a portion of the input depth image D, and may extract the masked depth image 230.

The depth image extractor 111 may extract the depth image based on a fixed sampling scheme or a variable sampling scheme. The fixed sampling scheme may perform sampling based on a predetermined scheme, and the variable sampling scheme may use variable sampling and may perform compression and transmission based on additional information.

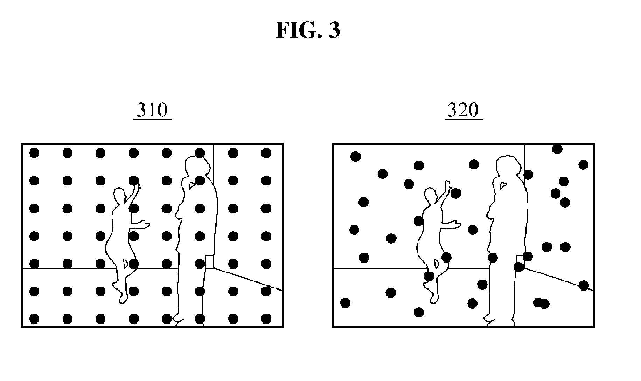

FIG. 3 illustrates an example of a fixed sampling scheme and a variable sampling scheme according to example embodiments.

Referring to FIG. 3, the depth image extractor 111 may perform sampling of an input depth image based on the fixed sampling scheme to extract fixed sampled depth image data 310 or may perform sampling of the input depth image based on the variable sampling scheme to extract variable sampled depth image data 320.

The coding unit 112 may perform coding of the extracted depth image and an input color image.

A depth image decoding apparatus 120 may include a decoding unit 121 and a depth image restoring unit 122.

The depth image decoding apparatus 120 may decode, using the decoding unit 121, data transmitted via a channel from the depth image coding apparatus 110 and may have as output a decoded color image C' and a sampled and decoded depth image $D_E$'. The depth image restoring unit 122 may restore a size of a sampled depth image to a size of an original image, and a final output depth image may be a restored depth image D' and the decoded color image C'.

The decoding unit 121 may decode the coded depth image and the coded color image.

The depth image restoring unit 122 may restore, based on the decoded color image C', a portion of the sampled and decoded depth image $D_E$' corresponding to a portion of the decoded color image C', when depth information associated with the portion of the sampled and decoded depth image $D_E$' does not exist.

When the decoded color image C' is used, the depth image restoring unit 122 may analyze at least one adjacent color image frame to obtain motion information between the frames, and may restore an uncompressed depth image or an non-transmitted depth image by performing sampling based on the obtained motion information.

The depth image restoring unit 122 may restore the portion of the decoded depth image using pixel values of the adjacent depth images.

When one of a block to be restored and a pixel to be restored refer to at least one value, the depth image restoring unit 122 may restore the portion of the decoded depth image based on an average value obtained by averaging the at least one value that is referred to by one of the block and the pixel.

The depth image restoring unit 122 may detect motion information based on a motion vector of color information associated with the decoded color image C' to obtain the motion information through the color information associated with the decoded color image C', may calculate a residual energy of the decoded color image C' by placing the motion vector in a center of a search range to predict a motion accuracy, and may determine the search range to restore the depth image.

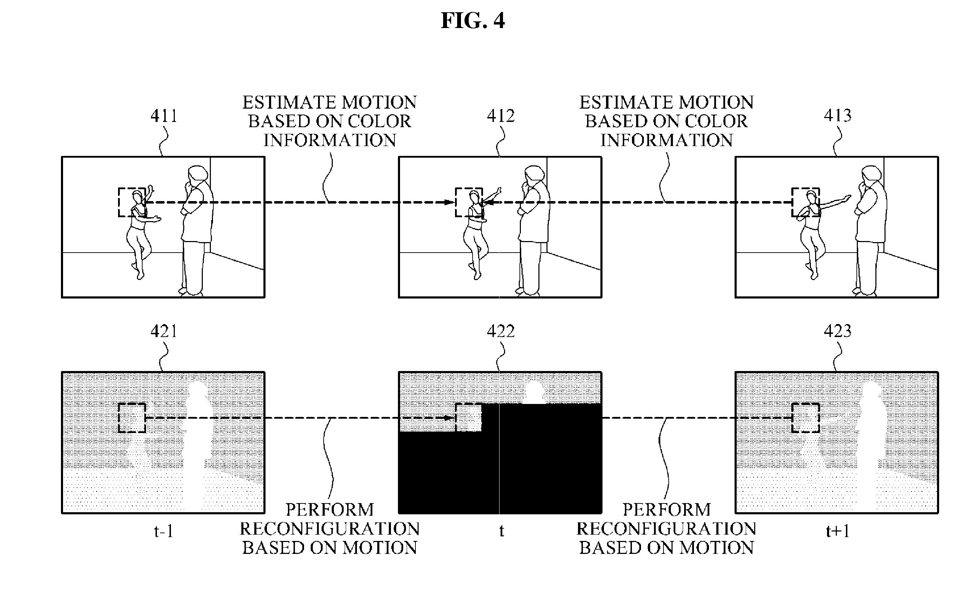

FIG. 4 illustrates an example of restoring a depth image using motion information of a decoded color image.

Referring to FIG. 4, the depth image restoring unit 122 may obtain the motion information between frames by analyzing color information of a decoded color image. In this example, the depth image restoring unit 122 may obtain motion information for each block and may obtain motion information for each pixel. The depth image restoring unit 122 may use a color image 411 of a t-1st frame and a color image 413 of a t+1st frame, to estimate motion based on color information associated with a color image 412 of a tth frame The depth image restoring unit 122 may use the estimated motion information, and may use a depth image 421 of the t-1st frame and a depth image 423 of the t+1st frame to reconfigure a depth image 422 of the tth frame based on the motion.

The depth image restoring unit 122 may apply, to the depth image, the motion information obtained form the color image and thus may maximally predict and restore based on the information associated with the t-1st frame and t+1st frame, depth information associated with the tth frame, which is not transmitted because of the sampling.

If the depth image restoring unit 122 may have two or more pieces of motion information, the depth image restoring unit 122 may calculate a final restored depth image by calculating an average value of predicted motion information values or by selecting motion information of a frame having a smaller prediction error value.

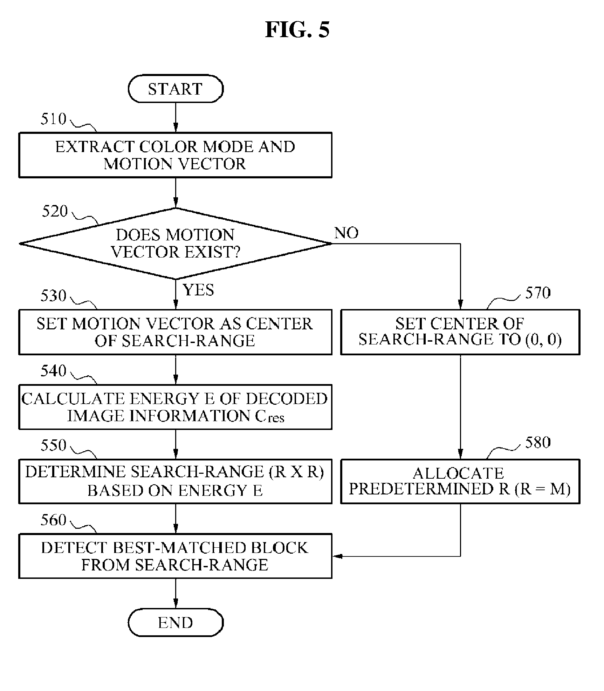

FIG. 5 illustrates a process of improving a prediction speed and an accuracy of motion information of a decoded color image.

Referring to FIG. 5, the depth image restoring unit 122 may extract a color mode and a motion vector in operation 510, and determine whether the motion vector exists in operation 520. The depth image restoring unit 122 may determine whether a motion vector of a corresponding macro block exists in a decoder end.

If the motion vector exists, the depth image restoring unit 122 may set the motion vector as a center of a search range in operation 530.

The depth image restoring unit 122 may calculate an energy E of decoded image information $C_{res}$ associated with a decoded image in operation 540. The depth image restoring unit 122 may extract the decoded image information $C_{res}$ of an image of the corresponding macro block to determine an accuracy of information associated with the motion vector. In this example, the decoded image information $C_{res}$ may be calculated based on Equation 1 as given below.

[Equation 1]

$$C_{res}(i, j) = C_t(i, j) - C_r(i + MV_x, j + MV_y)$$

In Equation 1, $C_t$ and $C_r$ may denote a current frame and a reference frame referred to by the current frame, respectively. i and j may denote 2D image coordinates, and MVx and MVy may denote motion vector value of a current macro block. An accuracy of the motion vector value of the corresponding macro block may be determined by calculating the energy E of the decoded image information $C_{res}$. The energy E of the decoded image information $C_{res}$ may be calculated based on Equation 2 as given below.

[Equation 2]

$$E = \sum_{i, j \in B} (C_{res}(i, j))^2$$

When a best-matched block matched to the corresponding block is detected based on the energy E of the decoded image information $C_{res}$, the search range may be adjusted. When the search-range is R x R, Equation 3 may be obtained as given below.

[Equation 3]

$$R = \min(\ \max(\ k\sqrt{E},m),M\ )$$

In Equation 3, m and M may denote a minimal value and a maximal value of a predetermined search range, respectively, and R may be within the search range.

The depth image restoring unit 122 may determine the search range, namely, R x R, based on the calculated energy E in operation 550, and detect the best-matched block from the search range in operation 560.

If the motion vector does not exist, the depth image restoring unit 122 may set the center of the search-range to (0, 0) in operation 570, allocate a predetermined R in operation 580, and detect the best-matched block from the search range determined based on the allocated R in operation 560.

The depth image coding apparatus, the depth image decoding apparatus, and the methods thereof according to example embodiments may decrease a bitrate generated when the depth image is compressed, compared with the same composite image quality Peak Signal to Noise Ratio (PSNR).

The method according to the above-described example embodiments may also be implemented through non-transitory computer readable code/instructions in/on a medium, e.g., a non-transitory computer readable medium, to control at least one processing element to implement any of the above described example embodiments. The medium can correspond to medium/media permitting the storing or transmission of the non-transitory computer readable code.

The non-transitory computer readable code can be recorded or transferred on a medium in a variety of ways, with examples of the medium including recording media, such as magnetic storage media (e.g., floppy disks, hard disks, etc.), optical recording media (e.g., CD-ROMs, or DVDs), transmission media and hardware devices that are specially configured to store and perform program instructions, such as read-only memory (ROM), random access memory (RAM), flash memory, and the like. The media may also be a distributed network, so that the non-transitory computer readable code is stored or transferred and executed in a distributed fashion. Still further, as only an example, the processing element could include a processor or a computer processor, and processing elements may be distributed or included in a single device. The computer-readable media may also be embodied in at least one application specific integrated circuit (ASIC) or Field Programmable Gate Array (FPGA). Examples of program instructions include both machine code, such as produced by a compiler, and files containing higher level code that may be executed by the computer using an interpreter.

In addition to the above described embodiments, example embodiments may also be implemented as hardware, e.g., at least one hardware based processing unit including at least one processor capable of implementing any of the above described example embodiments.

Although embodiments have been shown and described, it should be appreciated by those skilled in the art that changes may be made in these embodiments without departing from the principles and spirit of the disclosure, the scope of which is defined by the claims and their equivalents.

**Claims**

1. A depth image coding apparatus, the apparatus comprising:

   a computer comprising a depth image extractor to extract a depth image by performing sampling; and
   the computer comprising a coding unit to code the extracted depth image and an input color image.

2. The apparatus of claim 1, wherein the depth image extractor extracts the depth image by performing one of spatial-axis sampling, temporal-axis sampling, and masking
   and/or
   wherein the depth image extractor performs sampling of an input depth image to extract a sampled depth image having less information than the input depth image.

**3.** The apparatus of claim 2, wherein the depth image extractor performs one of:

temporal-axis sampling of the input depth image to extract a sampled depth image having less temporal information than the input depth image;

spatial-axis sampling of the input depth image to extract a sampled depth image having less spatial information than the input depth image; and

masking of the input depth image to extract a masked depth image.

**4.** The apparatus of claim 1, 2 or 3 wherein the depth image extractor extracts the depth image based on one of a fixed sampling scheme and a variable sampling scheme.

**5.** A depth image decoding apparatus, the apparatus comprising:

a computer, comprising a decoding unit to decode a coded depth image and a coded color image; and

the computer comprising a depth image restoring unit to restore a portion of the decoded depth image corresponding to a portion of the decoded color image based on the decoded color image, when depth information associated with the portion of the decoded depth image corresponding to the portion of the decoded color image does not exist.

**6.** The apparatus of claim 6, wherein the depth image restoring unit analyzes at least one adjacent color image frame to obtain motion information between frames when the decoded color image is used, and restores one of an uncompressed depth image and a non-transmitted depth image by performing sampling, and/or

wherein the depth image restoring unit restores the portion of the decoded depth image based on pixel values of adjacent depth images, and/or

wherein the depth image restoring unit restores the portion of the depth image based on an average value obtained by averaging at least one value that is referred to by one of a block and a pixel, when the block to be restored or the pixel to be restored refers to the at least one value, and/or

wherein the depth image restoring unit detects motion information based on a motion vector of color information associated with the decoded color image to obtain the motion information through the color information associated with the decoded color image, calculates a residual energy of the decoded color image by placing the motion vector in a center of a search range to predict a motion accuracy, and determines the search range to restore the portion of the depth image.

**7.** A depth image coding method, the method comprising:

extracting, by at least one processor, a depth image by performing sampling; and

coding, by the at least one processor, the extracted depth image and an input color image.

**8.** The method of claim 7, wherein the extracting comprises sampling of an input depth image to extract a sampled depth image having less information than the input depth image.

**9.** The method of claim 8, wherein the extracting comprises one of:

temporal-axis sampling of the input depth image to extract a sampled depth image having less temporal information than the input depth image;

spatial-axis sampling of the input depth image to extract a sampled depth image having less spatial information than the input depth image; and

masking of the input depth image to extract a masked depth image.

**10.** The method of claim 7, 8 or 9, wherein the extracting comprises extracting the depth image based on one of a fixed sampling scheme and a variable sampling scheme.

**11.** A depth image decoding method, the method comprising:

decoding, by at least one processor, a coded depth image and a coded color image; and

restoring, by the at least one processor, based on the decoded color image, a portion of the decoded depth image corresponding to a portion of the decoded color image, when depth information associated with the portion of the decoded depth image corresponding to the portion of the decoded color image does not exist.

12. The method of claim 11, wherein the restoring comprises analyzing at least one adjacent color image frame to obtain motion information between frames when the decoded color image is used, and restoring one of an uncompressed depth image and a non-transmitted depth image by performing sampling, and/or

wherein the restoring comprises restoring the portion of the decoded depth image using pixel values of adjacent depth images, and/or

wherein the restoring comprises restoring the portion of the decoded depth image based on an average value of at least one value that is referred to by one of a block and a pixel when one of the block to be restored and the pixel to be restored refers to the at least one value, and/or

wherein the restoring comprises detecting motion information based on a motion vector of color information associated with the decoded color image to obtain the motion information from the color information associated with the decoded color image, calculating a residual energy of the decoded color image by placing the motion vector in a center of a search range to predict a motion accuracy, and determining the search range to restore the depth image.

13. A method, comprising:

sampling and compressing a depth image using at least one processor and removing data from the depth image to form a sampled depth image; and

encoding the sampled depth image and a corresponding color image using the at least one processor.

14. A method, comprising:

decoding an encoded depth image and an encoded color image using at least one processor to form a decoded depth image and a decoded color image; and

recreating a first portion of the decoded depth image using a second portion of the decoded color image using the at least one processor without having access to depth data for the first portion, the first portion corresponding to the second portion.

15. At least one non-transitory computer readable medium comprising computer readable instructions that control at least one processor to implement the method of any of claims 7-14.

EP 2 400 768 A2

**FIG. 2**

EP 2 400 768 A2

**FIG. 3**

**FIG. 4**

ESTIMATE MOTION BASED ON COLOR INFORMATION

ESTIMATE MOTION BASED ON COLOR INFORMATION

411     412     413

421     422     423

t-1     t     t+1

PERFORM RECONFIGURATION BASED ON MOTION

PERFORM RECONFIGURATION BASED ON MOTION

# FIG. 5

```
                    ┌─────────────┐
                    │   START     │
                    └─────────────┘
                           │
510 ┌──────────────────────▼──────────────────────┐
    │         EXTRACT COLOR MODE AND               │
    │             MOTION VECTOR                    │
    └──────────────────────┬──────────────────────┘
                           │
520              ◇ DOES MOTION ◇──── NO ─────────┐
                 ◇ VECTOR EXIST? ◇               │
                           │                     │
                          YES                    │
530 ┌──────────────────────▼──────┐   570 ┌──────▼────────────────┐
    │  SET MOTION VECTOR AS CENTER │       │   SET CENTER OF       │
    │     OF SEARCH-RANGE          │       │ SEARCH-RANGE TO (0, 0)│
    └──────────────────────┬──────┘       └──────┬────────────────┘
                           │                     │
540 ┌──────────────────────▼──────┐              │
    │ CALCULATE ENERGY E OF DECODED│              │
    │   IMAGE INFORMATION C_res    │              │
    └──────────────────────┬──────┘              │
                           │                     │
550 ┌──────────────────────▼──────┐   580 ┌──────▼────────────────┐
    │ DETERMINE SEARCH-RANGE (R X R)│      │      ALLOCATE         │
    │     BASED ON ENERGY E        │       │ PREDETERMINED R (R = M)│
    └──────────────────────┬──────┘       └──────┬────────────────┘
                           │                     │
560 ┌──────────────────────▼──────────────────◄──┘
    │  DETECT BEST-MATCHED BLOCK   │
    │     FROM SEARCH-RANGE        │
    └──────────────────────┬──────┘
                           │
                    ┌──────▼──────┐
                    │    END      │
                    └─────────────┘
```

**REFERENCES CITED IN THE DESCRIPTION**

**Patent documents cited in the description**

- US 61358602 A
- KR 1020100078710